# EUROPEAN PATENT APPLICATION

(11) **EP 4 527 584 A1**
(43) Date of publication of application: **26.03.2025**
(21) Application number: 23807648.3
(22) Date of filing: 16.05.2023
(51) Int. Cl.: B29B 17/00, B29B 7/00, B29B 9/12, C08J 3/20, C08J 3/22, C08L 77/00, C08L 101/00

(54) **METHOD FOR PRODUCING RESIN COMPOSITION**

(30) Priority: 18.05.2022 JP 2022081294; 13.09.2022 JP 2022145244; 25.11.2022 JP 2022188169; 25.11.2022 JP 2022188170
(71) Applicant: Asahi Kasei Kabushiki Kaisha, Tokyo 1000006 (JP)
(72) Inventor: UMEMURA, Ryosuke, Tokyo 100-0006 (JP); SHIKANO, Yasukazu, Tokyo 100-0006 (JP); MIYOSHI, Takaaki, Tokyo 100-0006 (JP); FUSAMAE, Toru, Tokyo 100-0006 (JP)
(74) Representative: Hoffmann Eitle
(86) International application number: PCT/JP2023/018295
(87) International publication number: WO 2023/224046

(57) **Abstract**

A method for producing a resin composition according to the present invention comprises: a management step for performing management by recovering non-standard products generated in a manufacturing process of a thermoplastic resin and classifying the products according to grades based on a design factor A; a regeneration step for obtaining regenerated products by collectively regenerating the non-standard products classified under each grade; and a compound step for screening the regenerated products obtained in the regeneration step, on the basis of a design factor B for compounded products, and carrying out compounding on the resulting products.

## Description

### TECHNICAL FIELD

The present invention relates to a method for producing a resin composition.

Priority is claimed on Japanese Patent Application No. 2022-081294, filed May 18, 2022, Japanese Patent Application No. 2022-145244, filed September 13, 2022, Japanese Patent Application No. 2022-188169, filed November 25, 2022, and Japanese Patent Application No. 2022-188170, filed November 25, 2022, the contents of which are incorporated herein by reference.

### BACKGROUND ART

In recent years, various environmental measures have been taken so as to realize a sustainable society. Since resins such as plastics emit carbon dioxide when burned, it is expected that carbon neutrality will lead to even greater social demands to avoid burning resins. In particular, polyamide 66 (PA66) produces a relatively high amount of greenhouse gas (GHG) emissions per kg of resin, so there is an urgent need to respond to a circular economy (CE). Accordingly, substitution of resins with bio-derived resources or other materials is progressing, and recycling of parts that cannot be replaced is progressing so as to avoid burning.

For example, Patent Document 1 discloses a method for recycling plastic waste containing a plastic mixture composed of plural types of plastics.

### Citation List

### Patent Document

Patent Document 1: Japanese Unexamined Patent Application, First Publication No. 2007-130885

### SUMMARY OF INVENTION

### Technical Problem

When resins are produced, a certain amount of non-standard products are discharged, but physical properties such as molecular weight and moisture content vary from lot to lot, therefore it is necessary to analyze each lot. Furthermore, it is difficult to increase the blending ratio of the non-standard products to the virgin product in order to maintain a constant quality of the final product.

The present invention has been made in view of the above-mentioned circumstances, and provides a method for producing a resin composition with improved properties using non-standard products.

### Solution to Problem

That is, the present invention includes the following aspects.
(1) A method for producing a resin composition, including:
   a controlling step in which non-standard products generated in a production step of a thermoplastic resin are collected and classified into grades based on a design factor A to control the non-standard products;
   a recycling step in which the non-standard products in each grade are recycled by grade to obtain recycled products; and
   a compounding step in which the recycled products obtained in the recycling step are selected based on a design factor B of a compounded product and compounded.
(2) The method for producing the resin composition according to (1) mentioned above, wherein the non-standard products are made into a masterbatch in the recycling step.
(3) The method for producing the resin composition according to (1) mentioned above, wherein a coloring agent is added to the non-standard products in the recycling step.
(4) The method for producing the resin composition according to any one of (1) to (3) mentioned above, wherein the thermoplastic resin is in the form of pellets.
(5) The method for producing the resin composition according to any one of (1) to (4) mentioned above, wherein the design factor A is at least one selected from the group consisting of a concentration of copper, a type and an amount of additives, a contamination amount of foreign matter, a molecular weight, a moisture content, a color tone, and a type and an amount ratio of terminal groups.
(6) The method for producing the resin composition according to any one of (1) to (5) mentioned above, wherein the recycled products are mixed with a virgin product in the compounding step.
(7) The method for producing the resin composition according to (6) mentioned above, wherein the amount of recycled products relative to the total mass of the resin composition is 0.1% by mass or more in the compounding step.
(8) The method for producing the resin composition according to (6) or (7) mentioned above, wherein the recycled products and the virgin product are in the form of pellets, and
   a ratio of an average size of pellets of the recycled products to an average size of pellets of the virgin product is 0.7 or more and 1.3 or less.
(9) The method for producing the resin composition according to any one of (1) to (8) mentioned above, wherein the thermoplastic resin contains a polyamide resin.
(10) The method for producing the resin composition according to (9) mentioned above, wherein the polyamide resin is at least one selected from the group consisting of polyamide 6, polyamide 66, polyamide 610, polyamide 612, polyamide 61, polyamide 66/6, and polyamide 66/61.
(11) The method for producing the resin composition according to any one of (1) to (10) mentioned above, wherein the non-standard products are at least one selected from the group consisting of intermediate products at the time of production changeover due to a change in the type of thermoplastic resin, products contaminated with black spots, products contaminated with foreign matter, pellets with non-standard sizes, scraps from packaging, and products with non-standard physical properties.
(12) The method for producing the resin composition according to (1) or (3) mentioned above, wherein the recycling step includes:
   a melt-kneading step in which the non-standard products are melt-kneaded to obtain a melted product: and
   a pelletizing step in which the melted product after the melt-kneading step is pelletized to obtain pellets of the recycled products.
(13) The method for producing the resin composition according to (12) mentioned above, further including a foreign matter-removing step in which foreign matter is removed by passing the melted product through a metal mesh after the melt-kneading step and before the pelletizing step.
(14) The method for producing the resin composition according to (2) mentioned above, wherein the recycling step includes:
   a melt-kneading step in which the non-standard products are melt-kneaded to obtain a melted product; and
   a pelletizing step in which the melted product after the melt-kneading step is pelletized to obtain pellets of the recycled products, and
   an additive containing at least one selected from the group consisting of thermal stabilizers, antioxidants, fillers, flame retardants and coloring agents is added in the melt-kneading step.
(15) The method for producing the resin composition according to (14) mentioned above, wherein a mass ratio of the additive and the non-standard products is 10:90 to 90:10.
(16) The method for producing the resin composition according to (3) mentioned above, wherein a mass ratio of the coloring agent and the non-standard products is 0.1:99.9 to 10:90.

### Advantageous Effects of Invention

The present invention according to the above-mentioned aspects makes it possible to provide a method for producing a resin composition having improved properties using non-standard products.

### BRIEF DESCRIPTION OF DRAWINGS

[FIG. 1] Fig. 1 is a flowchart showing each step of the production method of the present embodiment.
[FIG. 2] Fig. 2 is a flowchart showing each step of the production method of another embodiment.

### DESCRIPTION OF EMBODIMENTS

Hereinafter, an embodiment in which the present invention is carried out (hereinafter, simply referred to as "the present embodiment") will be explained in detail. The present embodiment mentioned below is an illustration so as to explain the present invention, but the present invention is not intended to be limited to the following content. The present invention may be carried out with appropriate modifications within the scope of its gist.

**In** the present specification, the term "polyamide" means a polymer having an amide (-NHCO-) group in the main chain thereof.

### <<Method for producing resin composition>>

The method for producing the resin composition according to the present embodiment (hereinafter, may be simply referred to as "the production method according to the present embodiment") includes the following steps.

A controlling step in which non-standard products generated in a production step of a thermoplastic resin are collected and classified into grades based on a design factor A to control the non-standard products;
a recycling step in which the non-standard products in each grade are recycled by grade to obtain recycled products; and
a compounding step in which the recycled products obtained in the recycling step are selected based on a design factor B of a compounded product and compounded.

The production method according to the present embodiment makes it possible to improve properties of the resin composition using non-standard products by having the above-mentioned constitutions.

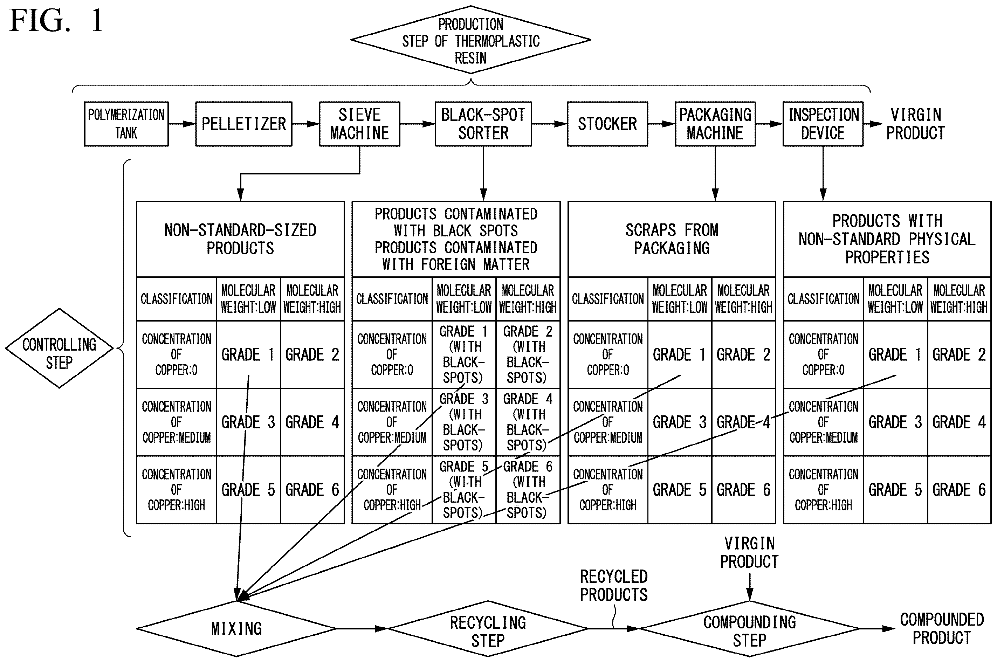

Fig. 1 is a flowchart showing each step of the production method according to the present embodiment. Each step of the production method according to the present embodiment will be explained in detail with reference to Fig. 1.

### <Controlling step>

In the controlling step, non-standard products generated in a production step of a thermoplastic resin are collected and classified into grades based on a design factor A to control the non-standard products.

The term "non-standard products" refers to thermoplastic resins that are excluded and cannot be handled as virgin products, because they do not meet conditions appropriately determined based on the use of the thermoplastic resins in terms of the form, size, physical properties, and the like.

Although the form of the produced thermoplastic resin is not particularly limited, the form is preferably pellets (cylindrical or non-cylindrical such as prismatic).

As shown in Fig. 1, non-standard products generated in the production step of a thermoplastic resin are collected in the controlling step.

The non-standard products collected in the controlling step are preferably at least one selected from the group consisting of the intermediate products at the time of production changeover due to the change in the type of thermoplastic resin, products contaminated with black spots, products contaminated with foreign matter, pellets with non-standard sizes, scraps from packaging, and products with non-standard physical properties.

The products contaminated with black spots and the products contaminated with foreign matter may be determined using a black-spot sorter (see FIG. 1), a foreign-matter sorter, or the like. When a coloring agent is used in the recycling step, it is preferable that the products contaminated with black spots and the products contaminated with foreign matter be excluded from targets collected to carry out the recycling step. The color of the resin composition can be easily adjusted by recycling the non-standard products after excluding the products contaminated with black spots and the products contaminated with foreign matter. The black spots and the foreign matter may also be removed by a filter in a recycling step mentioned below.

Examples of the black spots in the products contaminated with black spots include carbides caused by heating a resin, adhered to a production line and then mixed thereinto.

Examples of the foreign matter in the products contaminated with foreign matter include cross-linked resins and gelled resins.

The pellets with non-standard sizes are judged by a sieve machine.

The scraps from packaging remain as surplus when packaging is carried out by a packaging machine, or are generated when a line is co-washed to change the type of thermoplastic resin.

The products with non-standard physical properties are judged by an inspection device.

Examples of physical properties judged by the inspection device include moisture content, molecular weight, and color tone.

The moisture content can be measured using, for example, a Karl Fischer moisture meter (manufactured by Mitsubishi Chemical Corporation, CA-200/VA-200).

The molecular weight can be measured, for example, using a gel permeation chromatograph (GPC) (manufactured by Tosoh Corporation, HLC-8020, hexafluoroisopropanol solvent, converted based on PMMA (polymethyl methacrylate) standard sample (manufactured by Polymer Laboratories).

The color tone can be measured, for example, with a color difference meter (color difference meter manufactured by NIPPON DENSHOKU INDUSTRIES Co., Ltd., ZE-2000).

The collected non-standard products are classified into grades based on the design factor A and then stored. Specifically, each design factor A of the collected non-standard products is measured and the collected non-standard products are classified based on the measured values and stored.

Examples of the design factor A include the concentration of copper, the type and the amount of additives, the contamination amount of foreign matter, the molecular weight, the moisture content, the color tone, and the type and amount ratio of terminal groups. One type of these design factors A may be used alone or at least two types thereof may be used in combination to classify the grade of the non-standard products.

For example, when the "concentration of copper" and the "molecular weight" are selected as the design factor A in Fig. 1, the "concentration of copper" and the "molecular weight" of each collected non-standard product are measured, and the collected non-standard products are classified and put together based on each measured value. Specifically, non-standard products in which the concentration of copper is 0 and the molecular weight is low are classified into Grade 1 and collectively controlled. Non-standard products in which the concentration of copper is 0 and the molecular weight is high are classified into Grade 2 and collectively controlled. Non-standard products in which the concentration of copper is medium and the molecular weight is low are classified into Grade 3 and collectively controlled. Non-standard products in which the concentration of copper is medium and the molecular weight is high are classified into Grade 4 and collectively controlled. Non-standard products in which the concentration of copper is high and the molecular weight is low are classified into Grade 5 and collectively controlled. Non-standard products in which the concentration of copper is medium and the molecular weight is high are classified into Grade 6 and collectively controlled. The degrees "medium" and "high" of the concentration of copper and "low" and "high" of the molecular weight are determined appropriately based on the use of the resin composition.

The concentration of copper can be measured by X-ray fluorescence, for example.

The contamination amount of foreign matter may be adjusted based on the use or unuse of products removed by a black-spot sorter, for example.

The molecular weight, the moisture content, and the color tone can be measured as described above.

The type and amount ratio of terminal groups can be measured by NMR, for example.

### <Recycling step>

In a recycling step, non-standard products in each grade are recycled by grade to obtain recycled products.

For example, in Fig. 1, non-standard-sized products classified and controlled in Grade 1, products contaminated with black spots, products contaminated with foreign matter, scraps from packaging, and/or, products with non-standard physical properties are mixed and recycled. Non-standard-sized products classified and controlled in Grade 2, products contaminated with black spots, products contaminated with foreign matter, scraps from packaging, and/or, products with non-standard physical properties are mixed and recycled. Non-standard-sized products classified and controlled in Grade 3, products contaminated with black spots, products contaminated with foreign matter, scraps from packaging, and/or, products with non-standard physical properties are mixed and recycled. Non-standard-sized products classified and controlled in Grade 4, products contaminated with black spots, products contaminated with foreign matter, scraps from packaging, and/or, products with non-standard physical properties are mixed and recycled. Non-standard-sized products classified and controlled in Grade 5, products contaminated with black spots, products contaminated with foreign matter, scraps from packaging, and/or, products with non-standard physical properties are mixed and recycled. Non-standard-sized products classified and controlled in Grade 6, products contaminated with black spots, products contaminated with foreign matter, scraps from packaging, and/or, products with non-standard physical properties are mixed and recycled.

Thus, putting together the non-standard products classified and stored in the grade based on the design factor A to make recycled products collectively in each grade makes it easy to grasp physical properties of the recycled products and makes it possible to design easily products having desired physical properties, when compounded products are prepared using only the recycled products or prepared by mixing the recycled products with virgin products in the compounding step. The term "virgin product" means a compound or a composition prepared from raw material monomers, and does not encompass recycled products.

In the recycling step, a coloring agent may be added to the non-standard products.

In addition, the non-standard products classified into the same grade are put together and made into a masterbatch to be recycled as recycled products. In this case, an additive containing at least one selected from the group consisting of thermal stabilizers, antioxidants, fillers, flame retardants and coloring agents is preferably added in the recycling step.

Examples of the thermal stabilizers include copper compounds, metal halides, phosphorus-based thermal stabilizers, and amine-based thermal stabilizers. The copper compounds and the metal halides may be copper halides. The metal halides may be alkali metal halides or alkaline earth metal halides. Among them, copper halide is preferred as the thermal stabilizer.

Examples of the antioxidants include: phenol-based antioxidants such as hindered phenol compounds; and phosphorus-based antioxidants, and hindered phenol compounds are preferable.

Examples of the fillers include: inorganic fibers such as glass fibers and carbon fibers; clay minerals, and glass flakes, and glass fibers are preferable.

Examples of the flame retardants include phosphorus-based flame retardants and halogen-based flame retardants. The flame retardant may be a low-molecular or high-molecular substance as long as it can impart flame retardancy to the resin composition.

Examples of the coloring agent include pigments and dyes, and the coloring agent may be an organic or inorganic substance. Examples of the color of the coloring agent include achromatic colors such as black and white; chromatic colors such as red, blue, yellow, green, orange, brown, violet, and purple; and glossy colors such as metal and pearl.

In the recycling step, the mass ratio of the additive added to form a masterbatch and the non-standard products graded based on the design factor A is preferably 10:90 to 90:10. When the amount of additive relative to the total mass of the resin of the non-standard products and the additive is less than 10% by mass, the amount of recycled products (masterbatch) required to provide the additive in an amount required in the resin composition is increased, thereby deteriorating the productivity. When the amount of additive exceeds 90% by mass, it is not easy to form a masterbatch. The amount of additive relative to the total mass of the recycled product is preferably 10% by mass or more and 90% by mass or less.

Although the step in which the non-standard products classified into the same grade are put together to be made into a masterbatch is not particularly limited, it is preferable that the thermoplastic resin of the non-standard products be melt-kneaded after adding the additive thereto. It is possible to achieve at least one of improvement in the properties of the resin composition, improvement in the homogeneity of the additive in the resin composition, and suppression of deterioration in non-standard products in the recycling process, depending on the type of additive or the processing conditions, by carrying out compounding after making the non-standard products into a masterbatch in the recycling step.

For example, when a thermal stabilizer is added as an additive, the deterioration of the resin composition can be suppressed by suppressing the deterioration of the recycled products. When an antioxidant is added as an additive, the change in the color tone of the resin composition can be suppressed by suppressing the change in the color tone of the recycled product. In other cases, the homogeneity can be improved (the unopening of fibers can be suppressed in the case of fibrous fillers) by carrying out the compounding step by melt-kneading the non-standard products after the addition.

The mass ratio of the coloring agent added in the recycling step and the non-standard products graded based on the design factor A is preferably 0.1:99.9 to 10:90. When the amount of coloring agent relative to the total mass of the resin of the non-standard products and the coloring agent is less than 0.1% by mass, it is not easy to color the resin composition. When the amount of coloring agent exceeds 10% by mass, the amount tends to be excessive compared to the amount of coloring agent required in the resin composition. The amount of coloring agent relative to the total mass of the recycled product is preferably 0.1% by mass or more and 10% by mass or less.

In the step in which non-standard products in each grade based on the design factor A are recycled, the step of adding the coloring agent to the non-standard products is not particularly limited, but it is preferable that the thermoplastic resin of the non-standards be melt-kneaded after adding the coloring agent. The color of the resin composition can be easily adjusted to the desired color by carrying out compounding after adding a coloring agent to the non-standard products and then carrying out the recycling step.

Specifically, the recycling step preferably includes the following steps.

A melt-kneading step in which non-standard products are melt-kneaded to obtain a melted product; and
a pelletizing step in which the melted product after the melt-kneading step is pelletized to obtain pellets of the recycled product.

### [Melt-kneading step]

In the melt-kneading step, non-standard products are melt-kneaded.

The non-standard products classified into the same grade are put together and subjected to melt-kneading. At this time, it is preferable that the products contaminated with black spots and the products contaminated with foreign matter be mixed with non-standard products having neither black spots nor foreign matter to form a melted product. Thus, the amount of black spots and foreign matter can be diluted. Furthermore, since the amount of black spots and foreign matter can be diluted, clogging of the metal mesh due to black spots and foreign matter can be more effectively suppressed when a foreign matter-removing step mentioned below is carried out.

As a melt-kneading device, a conventionally-known device such as a single-screw or twin-screw extruder, a Banbury mixer, or a melt-kneader such as a mixing roll is preferably used.

When an additive containing at least one selected from the group consisting of thermal stabilizers, antioxidants, fillers, flame retardants, and coloring agents is added to non-standard products to form a masterbatch, the additive is preferably added in the melt-kneading step. In this case, the thermoplastic resin of the non-standard products may be heated and melted after introducing the non-standard products and the additive into a melt-kneading device.

Even when a coloring agent is added to the non-standard products, the coloring agent is preferably added in the melt-kneading step. The thermoplastic resin of the non-standard products may be heated and melted after the non-standard products and the coloring agent are introduced into a melt-kneading device.

The melt-kneading temperature is preferably higher than the melting point of the thermoplastic resin (preferably polyamide resin) of the non-standard products by about 1°C or more and 100°C or less, more preferably about 10°C or more and 50°C or less.

The shear rate in the kneading device is preferably about 100 sec⁻¹ or more, and the average residence time during kneading is preferably about 0.5 minutes or more and 5 minutes or less.

### [Pelletizing step]

In the pelletizing step, the melted product after the melt-kneading step is pelletized to obtain pellets of the recycled product. Specifically, the melted product is preferably cooled, and cut with a conventionally-known device such as a pelletizer or a cutter to obtain pellets having a desired size, and the melted product is more preferably extruded as a strand, cooled (water-cooled) and cut to obtain pellets having a desired size.

The recycling step may further include the following foreign matter-removing step after the melt-kneading step and before the pelletizing step.

The foreign matter-removing step in which the melted product is passed through a metal mesh to remove foreign matter.

When the filler added in the recycling step tends to clog the metal mesh, the foreign matter-removing step is preferably omitted.

### [Foreign matter-removing step]

In the foreign matter-removing step, the melted product is passed through the metal mesh to remove foreign matter. Black spots and foreign matter contained in the non-standard products can be removed by carrying out the foreign matter-removing step, and therefore the quality of the resultant product can be further improved. Examples of the black spots and foreign matter include the black spots and foreign matter described in the controlling step.

As the metal mesh, one having a mesh number of 50 or more and 500 or less may be used, and one having a mesh number of 300 or more and 400 or less may be used, for example.

### <Compounding step>

In the compounding step, the recycled product obtained in the recycling step is selected based on the design factor B of the compounded product and compounded.

The term "compounded product" refers to a resin composition produced by the compounding step.

Although the compounding step is not limited, the compounding step preferably includes: a melt-kneading step in which a virgin product or a recycled product is melt-kneaded; and a pelletizing step in which the melted product is pelletized.

Examples of the design factor B of the compounded product include the type of thermoplastic resin, the concentration of copper, the type and the amount of additives, the molecular weight, the moisture content, the type and amount ratio of terminal groups, and the color tone. The recycled product is selected using one of these design factors alone or at least two thereof in combination.

Copper or an additive may be added to the selected recycled product, as needed.

Although the additive is not particularly limited, examples thereof include thermal stabilizers, antioxidants, fillers, flame retardants, coloring agents, flame retardant aids, compatibilizers, and rubber components.

The additive added to the recycled product in the compounding step may be identical to or different from the additive added in the recycling step, but is preferably selected from additives different from the additive added in the recycling step.

The coloring agent may be added only in the recycling step, or may be further added in the compounding step. The coloring agent added to the recycled product in the compounding step may be identical to or different from the coloring agent added in the recycling step, but is preferably selected from additives different from the coloring agent added in the recycling step. In order to adjust the color of the resin composition due to the coloring agent added in the recycling step to a desired color, the coloring agent may be added in the compounding step, and, for example, a dye may be added in the compounding step.

Compounding may be carried out using only the recycled product obtained in the recycling step, or using a mixture of the recycled products and a virgin product. Among them, compounding is preferably carried out using the mixture of the recycled products and a virgin product from the viewpoint of maintaining uniform physical properties or quality of the resultant resin composition. A thermoplastic resin which is a different type from the thermoplastic resin contained in the recycled product may be used as the virgin product.

When the recycled products made into a masterbatch and a virgin product are mixed, the additive contained in the recycled products in a high concentration may be diluted appropriately to obtain a compounded product in which the additive is homogeneously dispersed.

The coloring agent contained in the recycled products may be diluted appropriately by mixing the recycled products including the added coloring agent with a virgin product to obtain a compounded product in which the coloring agent is homogeneously dispersed.

When the design factor B is the concentration of copper in Fig. 1, compounding is carried out by selecting a recycled product recycled from non-standard products classified into the grade in which the concentration of copper is 0 (corresponding to Grades 1 and 2 in Fig. 1) so as to produce a resin composition in which the concentration of copper is 0 only from the recycled products. When the design factor B is the concentration of copper and the molecular weight, compounding may be carried out by selecting a recycled product recycled from non-standard products classified into either Grade 1 or Grade 2 so as to obtain a desired molecular weight, or selecting a recycled product recycled from non-standard products classified into Grade 1 and a recycled product recycled from non-standard products classified into Grade 2, followed by adjusting the mixing mass ratio thereof appropriately.

Alternatively, for example, when the design factor B is the concentration of copper, a recycled product obtained from non-standard products classified into the grade in which the concentration of copper is 0 (corresponding to Grades 1 and 2 in Fig. 1) is selected to be mixed with a virgin product in which the concentration of copper is 0 so as to produce a resin composition in which the concentration of copper is 0 by mixing the recycled product and the virgin product. When the design factor B is the concentration of copper and the molecular weight, and the molecular weight of the virgin product in which the concentration of copper is 0 is high, the fluctuation in the molecular weight of the obtained resin composition can be decreased by making the blended amount of the recycled product obtained from non-standard products classified into Grade 2 in Fig. 1 higher than the blended amount of the recycled product obtained from non-standard products classified into Grade 1 in Fig. 1.

In addition, for example, when the design factor B is the concentration of copper, a recycled product obtained from non-standard products classified into the grade in which the concentration of copper is high (corresponding to Grades 5 and 6 in Fig. 1) is selected to be mixed with a virgin product in which the concentration of copper is high so as to produce a resin composition in which the concentration of copper is high. When the design factor B is the concentration of copper and the molecular weight, and the molecular weight of the virgin product in which the concentration of copper is high is high, the fluctuation in the molecular weight of the obtained resin composition can be decreased by making the blended amount of the recycled product obtained from non-standard products classified into Grade 6 in Fig. 1 higher than the blended amount of the recycled product obtained from non-standard products classified into Grade 5 in Fig. 1.

Alternatively, when the design factor B is the concentration of copper, a recycled product obtained from non-standard products classified into the grade in which the concentration of copper is 0 (corresponding to Grades 1 and 2 in Fig. 1), or a recycled product obtained from non-standard products classified into the grade in which the concentration of copper is medium (corresponding to Grades 3 and 4 in Fig. 1) is selected, and a necessary amount of copper is added thereto, followed by mixing the resultant with a virgin product in which the concentration of copper is high. When the design factor B is the concentration of copper and the molecular weight, and the molecular weight of the virgin product in which the concentration of copper is high is high, the fluctuation in the molecular weight of the obtained resin composition can be decreased by making the blended amount of a recycled product obtained from non-standard-sized products classified into Grade 2 or Grade 4 in Fig. 1 higher than the blended amount of a recycled product obtained from non-standard-sized products classified into Grade 1 or Grade 3 in Fig. 1.

In the compounding step, a resin other than the thermoplastic resin may be melt-kneaded together with the recycled product and, as needed, a virgin product and an additive, and then pelletized to obtain pellets of a compounded product.

The additive added in the recycling step may be melt-kneaded with the thermoplastic resin a total of two or more times in the recycling step and the compounding step.

The amount of recycled product relative to the total mass of the resin composition is preferably 0.1% by mass or more in the compounding step. Although the upper limit of the amount of recycled product is not particularly limited, the upper limit may be 100% by mass or less, and preferably less than 100% by mass. Another resin and/or additive may be blended with the recycled product or the mixture of the recycled product and the virgin product. When compounding is carried out using the recycled product only, at least two types of the recycled product may be blended appropriately.

When the products contaminated with black spots are removed in the recycling step, the amount of recycled product having black spots relative to the total mass of the resin composition is preferably 0.1 % by mass or less, and the amount of black spots relative to the total mass of the resin composition is preferably 0.01% by mass or less in the compounding step. Thereby, the influence of black spots on the obtained resin composition can be further reduced, and the quality of the resin composition can be made uniform.

In the compounding step, the ratio of the average size of pellets of the recycled product to the average size of pellets of the virgin product is preferably 0.7 or more and 1.3 or less, and more preferably 0.8 or more and 1.2 or less, from the viewpoint of making the quality of the obtained resin composition uniform. The term "average size of pellets" means the average value of the cross-sectional diameter in a horizontal direction in the case of cylindrical pellets, the average length of the bottom side in the case of prismatic pellets, and the average value of the diameter of the circle circumscribing the cross section in a horizontal direction in the case of non-cylindrical pellets (excluding prismatic pellets). For example, the average size of pellets can be determined with a microscope using 100 pellets by measuring each cross-sectional diameter in a horizontal direction in the case of cylindrical pellets, each length of the bottom side in the case of prismatic pellets, or each diameter of the circle circumscribing the cross section in a horizontal direction in the case of non-cylindrical pellets (excluding prismatic pellets) and then calculating an average value thereof based on number.

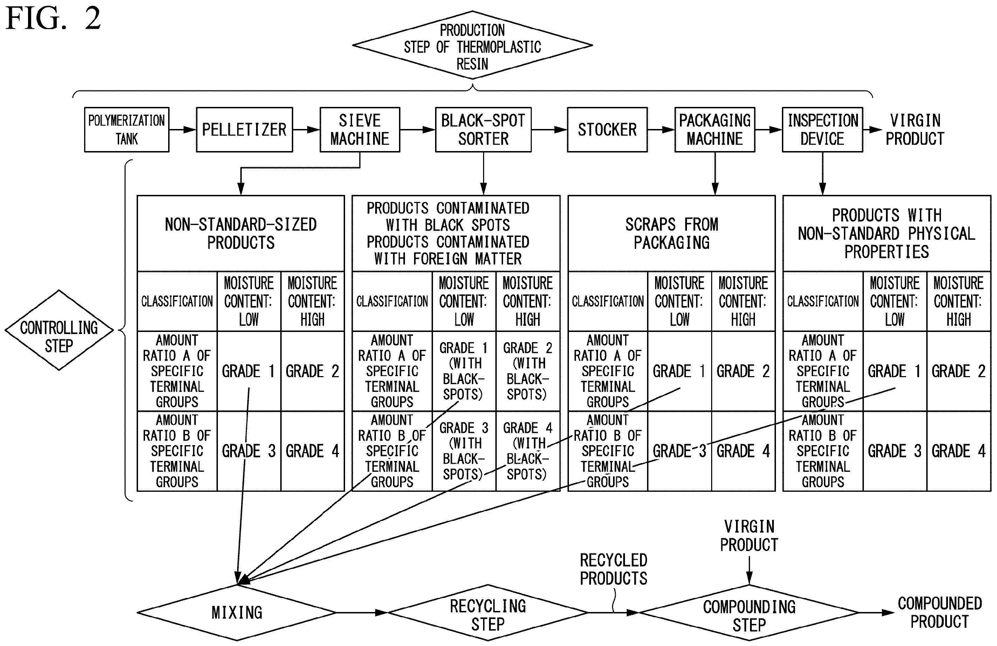

Fig. 2 is a flowchart showing each step of the production method of another embodiment. Fig. 2 is the same as Fig. 1, except that the "type and amount ratio of terminal groups" and "moisture content" are set as the design factor A. Therefore, the explanations with reference to Fig. 1 are also applied to Fig. 2. Regarding the amount ratios A and B of specific terminal groups in Fig. 2, for example, the ratio of the amount of amino terminal groups to the total molar amount of the amino terminal groups and carboxy terminal groups in each non-standard product, the ratio being within a specific range, may be set as the amount ratio A, and the ratio lower than the range of the ratio A may be set as the amount ratio B. Alternatively, for example, the molar ratio (mol %) of the amount of amino terminal groups to the total molar amount of terminal groups, the molar ratio being within a specific range, may be set as the amount ratio A, and the molar ratio lower than the range of the amount ratio A may be set as the amount ratio B. Alternatively, for example, the molar equivalent (molar equivalent/g) of amino terminal groups per g of the nonstandard products, the molar equivalent being within a specific range, may be set as the amount ratio A, and the molar equivalent lower than the range of the amount ratio A may be set as the amount ratio B. The specific terminal groups, the specific range of the amount ratio thereof, and "low" and "high" of the moisture content are determined as appropriate based on the use of the resin composition (compounded product).

### <Production step of thermoplastic resin>

Although the production step of a thermoplastic resin in which the non-standard products are generated is not particularly limited, the production step preferably includes: a polymerization step in which raw material monomers are polymerized in a polymerization tank; and a screening and removal step in which non-standard products are sorted and removed, for example.

Examples of the thermoplastic resin include polyamide resin, polyester resin, polyacetal resin, polycarbonate resin, polyacrylic resin, polyphenylene ether resin (including modified polyphenylene ethers modified by blending or graft-polymerizing polyphenylene ether with other resins), polyarylate resin, polysulfone resin, polyphenylene sulfide resin, polyether sulfone resin, polyketone resin, polyphenylene ether ketone resin, polyimide resin, polyamideimide resin, polyetherimide resin, polyurethane resin, polyolefin resin (such as α-olefin (co)polymer), and various ionomers. Among them, polyamide resin is preferable.

### [Polymerization step]

The polymerization step in which raw material monomers are polymerized in a polymerization tank to obtain a thermoplastic resin is not particularly limited, and may be carried out by a conventionally-known method. For example, when the thermoplastic resin is a polyamide resin, examples thereof include a step in which a dicarboxylic acid which constitutes a dicarboxylic acid unit, a diamine which constitutes a diamine unit, and, as needed, at least one of a lactam which constitutes a lactam unit and an aminocarboxylic acid which constitutes an aminocarboxylic acid unit are polymerized in a polymerization tank; and a step carried out by the method described in "Polyamide resin" and "Production method of polyamide resin" mentioned below.

### [Screening and removal step]

Although the screening and removal step in which non-standard products are sorted and removed is not particularly limited, at least one step selected from the group consisting of: a step in which pellets with non-standard sizes are sorted and removed by a sieve machine; a step in which products contaminated with black spots and/or products contaminated with foreign matter are sorted and removed using a black-spot sorter or a foreign-matter sorter; and a step in which physical properties are measured by an inspection device to sort and remove products with non-standard physical properties is preferably carried out, and at least one step selected from the group consisting of: a step in which pellets with non-standard sizes are sorted and removed by a sieve machine; and a step in which physical properties are measured by an inspection device to sort and remove products with non-standard physical properties is preferably carried out.

Examples of the inspection device used to sort products with non-standard physical properties include the following devices.

A Karl Fischer moisture meter (manufactured by Mitsubishi Chemical Corporation, CA-200/VA-200) is used to measure the moisture content, for example.

A gel permeation chromatograph (GPC) (manufactured by Tosoh Corporation, HLC-8020, hexafluoroisopropanol solvent, converted based on standard sample PMMA (polymethyl methacrylate) (manufactured by Polymer Laboratories)) is used to measure the molecular weight, for example.

A color difference meter (color difference meter manufactured by NIPPON DENSHOKU INDUSTRIES Co., Ltd., ZE-2000) is used to measure the color tone, for example.

### [Pelletizing step]

It is preferable that a pelletizing step in which the polymer obtained in the polymerization step is cut using a conventionally-known device such as a pelletizer or cutter be further carried out between the polymerization step and the screening and removal step.

It is preferable that the polymer in a melted state be extruded as a strand, cooled (preferably water-cooled), and cut in the pelletizing step.

### [Packaging step]

In the production step of a thermoplastic resin, a packaging step in which pellets are packaged using a packaging machine is preferably carried out between a step in which the products contaminated with black spots and the products contaminated with foreign matter are sorted and removed and a step in which the products with non-standard physical properties are sorted and removed.

Scraps from packaging that remain as surplus in the packaging step or are generated when a line is co-washed when the type of thermoplastic resin is changed are removed as non-standard products.

The thermoplastic resin may be stored in a stocker such as a silo during the step in which the non-standard products are sorted and removed before or after the packaging step, for example.

The thermoplastic resin obtained through the production step of a thermoplastic resin (sometimes referred to as a virgin product) may be mixed with a recycled product in the compounding step to prepare a resin composition (compounded product).

### <Resin composition>

The resin composition obtained by the production method according to the present embodiment preferably contains a thermoplastic resin as the main component thereof. The thermoplastic resin that becomes the main component of the resin composition may be the same type as or different type from the thermoplastic resin that generates non-standard products in the production step, that is, the non-standard products.

The resin composition obtained by the production method according to the present embodiment may contain other resins and/or additives in addition to the thermoplastic resin that becomes the main component thereof. Other resins may be selected from the thermoplastic resins mentioned above. Although other resins and/or additives are not particularly limited, examples thereof include thermal stabilizers, antioxidants, fillers, flame retardants, coloring agents, flame retardant aids, compatibilizers, and rubber components.

As the heat stabilizers, antioxidants, fillers, flame retardants, and coloring agents, those described above may be used.

The flame retardant aid is preferably used in combination with a flame retardant.

Examples of the flame retardant aids include metal oxides and metal hydroxides.

When two or more resins are mixed, examples of the compatibilizers include substances that chemically or physically interact with each resin to improve compatibility. A modified resin obtained by functionalizing at least one of two or more resins by grafting or the like may also be used as the compatibilizer. The modified resin can improve compatibility with other resins compared to an unmodified resin.

Examples of the rubber components include styrene-based copolymers.

### [Polyamide resin]

Examples of the polyamide resin include: polyamides (a-1) obtained by ring-opening polymerization of lactam; polyamides (a-2) obtained by self-condensation of ω-aminocarboxylic acid; and polyamides (a-3) obtained by condensation of diamine and dicarboxylic acid, and copolymers thereof. One type of these polyamide resins may be used alone or at least two types thereof may be used in combination.

Although the lactam used in the production of the polyamide (a-1) is not limited to the following compounds, examples thereof include pyrrolidone, caprolactam, undecalactam, and dodecalactam.

Although the ω-aminocarboxylic acid used in the production of the polyamide (a-2) is not limited to the following compounds, examples thereof includes ω-amino fatty acids which are ring-opened compounds of the above-mentioned lactams with water.

Furthermore, as the lactam or the ω-aminocarboxylic acid, two or more types of monomers may be condensed in combination.

Although the diamine (monomer) used to produce the polyamide (a-3) is not limited to the following compounds, examples thereof include linear aliphatic diamines, branched aliphatic diamines, alicyclic diamines, and aromatic diamines.

Although the linear aliphatic diamine is not limited to the following compounds, examples thereof include hexamethylene diamine, and pentamethylene diamine.

Although the branched aliphatic diamine is not limited to the following compounds, examples thereof include 2-methylpentanediamine, and 2-ethylhexamethylene diamine.

Although the alicyclic diamine is not limited to the following compounds, examples thereof include cyclohexane diamine, cyclopentanediamine, and cyclooctanediamine.

Although the aromatic diamine is not limited to the following compounds, examples thereof include p-phenylenediamine, and m-phenylenediamine.

Although the dicarboxylic acid (monomer) used to produce the polyamide (a-3) is not limited to the following compounds, examples thereof include aliphatic dicarboxylic acids, alicyclic dicarboxylic acids, and aromatic dicarboxylic acids.

Although the aliphatic dicarboxylic acids are not limited to the following compounds, examples thereof include adipic acid, pimelic acid, and sebacic acid.

Although the alicyclic dicarboxylic acids are not limited to the following compounds, examples thereof include cyclohexanedicarboxylic acid.

Although the aromatic dicarboxylic acids are not limited to the following compounds, examples thereof include phthalic acid, and isophthalic acid.

The diamine and dicarboxylic acid as monomers described above may be condensed each solely or in combination of two or more types thereof.

Specific examples of the polyamide resin include polyamide 4 (poly α-pyrrolidone), polyamide 6 (polycaproamide), polyamide 11 (polyundecaneamide), polyamide 12 (polydodecanamide), and polyamide 46 (polytetramethylene adipamide). polyamide 56 (polypentamethylene adipamide), polyamide 66 (polyhexamethylene adipamide), polyamide 610 (polyhexamethylene sebacamide), polyamide 612 (polyhexamethylene dodecamide), polyamide 61 (polyhexamethylene isophthalamide), polyamide 6T (polyhexamethylene terephthalamide), polyamide 9T (polynonane methylene terephthalamide), and copolyamides containing these as constituents.

Among them, the polyamide resin is preferably at least one selected from the group consisting of polyamide 6, polyamide 66, polyamide 610, polyamide 612, polyamide 61, polyamide 66/6, and polyamide 66/6I, and more preferably at least one selected from the group consisting of polyamide 6, polyamide 66 and polyamide 6I.

The terminals of the polyamide resin may be terminal-capped with a conventionally-known terminal-capping agent.

Such a terminal-capping agent may be added as a molecular weight regulator when a polyamide resin is produced from the dicarboxylic acid, the diamine, and, as needed, at least one of the lactam and the aminocarboxylic acid.

Although the terminal-capping agent is not limited to the following compounds, examples thereof include monocarboxylic acids, monoamines, acid anhydrides, monoisocyanates, monoacid halides, monoesters, and monoalcohols. Although the acid anhydrides are not limited to the following compounds, examples thereof include phthalic anhydride. One type of these terminal capping agents may be used alone or at least two types thereof may be used in combination.

Among them, monocarboxylic acids or monoamines are preferable as the terminal-capping agent. The polyamide resin tends to have excellent thermal stability by capping the terminals of the polyamide resin with the terminal-capping agent.

The monocarboxylic acid that can be used as the terminal-capping agent may be any monocarboxylic acid as long as it has reactivity with amino groups that may exist at the terminals of the polyamide resin. Although the monocarboxylic acid is not limited to the following compounds, specific examples thereof include aliphatic monocarboxylic acids, alicyclic monocarboxylic acids, and aromatic monocarboxylic acids.

Although the aliphatic monocarboxylic acids are not limited to the following compounds, examples thereof include formic acid, acetic acid, propionic acid, butyric acid, valeric acid, caproic acid, caprylic acid, lauric acid, tridecylic acid, myristic acid, palmitic acid, stearic acid, pivalic acid, and isobutyric acid.

Although the alicyclic monocarboxylic acids are not limited to the following compounds, examples thereof include cyclohexanecarboxylic acid.

Although the aromatic monocarboxylic acids are not limited to the following compounds, examples thereof include benzoic acid, toluic acid, α-naphthalenecarboxylic acid, β-naphthalenecarboxylic acid, methylnaphthalene carboxylic acid, and phenylacetic acid.

One type of these monocarboxylic acids may be used alone or at least two types thereof may be used in combination.

The monoamine that can be used as the terminal-capping agent may be any monoamine as long as the monoamine has reactivity with a carboxy group that may exist at the terminal of the polyamide resin. Although the monoamine is not limited to the following compounds, specific examples thereof include aliphatic monoamines, alicyclic monoamines, and aromatic monoamines.

Although the aliphatic amines are not limited to the following compounds, examples thereof include methylamine, ethylamine, propylamine, butylamine, hexylamine, octylamine, decylamine, stearylamine, dimethylamine, diethylamine, dipropylamine, and dibutylamine.

Although the alicyclic amines are not limited to the following compounds, examples thereof include cyclohexylamine and dicyclohexylamine.

Although the aromatic amines are not limited to the following compounds, specific examples thereof include aniline, toluidine, diphenylamine, and naphthylamine.

One type of these monoamines may be used alone or at least two types thereof may be used in combination.

The polyamide resin having a terminal capped with a terminal-capping agent tends to exhibit excellent heat resistance, fluidity, toughness, low water absorption properties, and rigidity.

### [Production method of polyamide resin]

Although the production method of the polyamide resin is not limited to the following method, the method includes a step in which a dicarboxylic acid that constitutes a dicarboxylic acid unit, and a diamine that constitutes a diamine unit, and, as needed, at least one of a lactam that constitutes a lactam unit and an aminocarboxylic acid that constitutes an aminocarboxylic acid unit are polymerized to obtain a polymer, for example.

Moreover, it is preferable that the production method of the polyamide resin further include a step of increasing the polymerization degree of the polyamide resin.

Furthermore, the production method of the polyamide resin may further include a capping step in which the terminal of the obtained polymer is capped with a terminal-capping agent, as needed.

Specific examples of the production method of the polyamide resin include various methods as mentioned in 1) to 4) below.
1) A method in which an aqueous solution of a dicarboxylic acid - diamine salt, a mixture of a dicarboxylic acid and a diamine, or an aqueous suspension thereof is heated and polymerized while maintaining the melted state (hereinafter, may be referred to as "hot melt polymerization method") ).
2) A method in which the polymerization degree is increased while maintaining a polyamide obtained by a hot melt polymerization method in a solid state at a temperature not higher than the melting point thereof (hereafter, may be referred to as "hot melt polymerization / solid phase polymerization method").
3) A method in which a dicarboxylic acid-diamine salt or a mixture of a dicarboxylic acid and a diamine is polymerized while maintaining the solid state thereof (hereafter, may be referred to as "solid phase polymerization method").
4) A method in which a polymerization is carried out using a dicarboxylic acid halide component equivalent to a dicarboxylic acid and a diamine component (hereafter, may be referred to as "solution method").

Among them, a production method including the hot melt polymerization method is preferable as the production method of the polyamide resin. When the polyamide resin is produced by the hot melt polymerization method, it is preferable that the melted state be maintained until the completion of the polymerization. Examples of the method for maintaining the melted state include a method in which production is carried out under polymerization conditions suitable to the constitution of the polyamide resin. Examples of the polymerization conditions include the following conditions. First, the polymerization pressure in the hot melt polymerization method is controlled within a range from 14 kg/cm² to 25 kg/cm² (gauge pressure), and heating is continued. Then, the pressure inside the tank is reduced over a period of at least 30 minutes to atmospheric pressure (a gauge pressure of 0 kg/cm²), thereby obtaining a polyamide having a desired constitution.

In the production method of the polyamide resin, there are no particular limitations on the mode of polymerization, and the mode may be either batch or continuous.

There are no particular limitations on the polymerization device used in the production of the polyamide resin, a conventionally-known polymerization tank may be used, and an autoclave reactor, a tumbler reactor, and an extruder reactor such as a kneader may be used, for example.

A method for producing a polyamide resin using a batch hot melt polymerization method will be described below specifically as the production method of the polyamide resin, but the production method of the polyamide resin is not limited to the following method.

First, an aqueous solution containing about 40% by mass to 60% by mass of raw materials of a polyamide resin (a dicarboxylic acid and a diamine, and, as needed, at least one of a lactam and an aminocarboxylic acid) is concentrated to about 65% by mass to 90% by mass in a concentration tank that is operated at a temperature of 110°C to 180°C and a pressure of about 0.035 MPa to 0.6 MPa (gauge pressure), thus obtaining a concentrated solution.

Then, the obtained concentrated solution is transferred to an autoclave, and heating is continued until the pressure inside the autoclave reaches about 1.2 MPa to 2.2 MPa (gauge pressure).

Subsequently, the pressure inside the autoclave is maintained at about 1.2 MPa to 2.2 MPa (gauge pressure) while removing at least one of water and gaseous components, and when the temperature reaches about 220°C to 260°C, the pressure is lowered to atmospheric pressure (gauge pressure is 0 MPa).

Once the pressure inside the autoclave has fallen to atmospheric pressure, the pressure is reduced, as needed, to effectively remove any by-product water.

Subsequently, the autoclave is pressurized using an inert gas such as nitrogen, and the polyamide melted product is extruded from the autoclave as a strand. The extruded strand is cooled and cut to obtain pellets of the polyamide resin.

### [Polymer terminal of polyamide resin]

Although there are no particular limitations on the polymer terminals of the polyamide resin, the polymer terminals may be classified and defined as follows.

Namely, 1) amino terminals, 2) carboxyl terminals, 3) terminals due to a capping agent, and 4) other terminals.
1) Amino terminals are polymer terminals having an amino group (-NH₂ group), and are derived from a diamine unit of the raw material.
2) Carboxyl terminals are polymer terminals having a carboxyl group (-COOH group), and are derived from the raw material dicarboxylic acid.
3) Terminals due to a capping agents are terminals formed when a capping agent is added during the polymerization. Examples of the capping agent include the terminal-capping agents described above.
4) Other terminals are polymer terminals that cannot be classified into the above-mentioned 1) to 3). Specific examples of these other terminals include terminals produced when an amino terminal undergoes a deammoniation reaction, and terminals produced when a carboxyl terminal undergoes a decarboxylation reaction.

### Examples

Hereinafter, the present invention will be explained with reference to examples, but the present invention is not limited to the following examples.

### [Examples 1 to 4]

First, a virgin product (polyamide 66) was produced in accordance with the flowchart shown in FIG. 1. Next, non-standard products generated in the production step of the virgin product of polyamide 66 were classified into Grades 1 to 4 based on the design factor A (the concentration of copper and molecular weight). The non-standard products classified into the same grade were mixed and melt-kneaded. Namely, four types of melt-kneaded products were obtained, each of the types being derived from only the non-standard products of Grade 1, Grade 2, Grade 3, or Grade 4. Next, each of the four types of melt-kneaded products was sequentially passed through a metal mesh (mesh number: 200) to remove foreign matter, and then pelletized to obtain each of four types of recycled product (recycled pellets) derived from the non-standard products of Grades 1 to 4. Next, a recycled product derived from the non-standard products of Grade 1 or a recycled product derived from the non-standard products of Grade 2, selected as a recycled product based on design factor B (the concentration of copper and molecular weight); the obtained virgin product (Polyamide 66) or another virgin product (Polyamide 6I or Polyamide 6); and additives (a flame retardant, a flame retardant aid, a compatibilizer, a styrene copolymer, an antioxidant and/or a filler) were melt-kneaded in the amounts shown in Table 1 below, and then pelletized (compounded) to produce each resin composition containing the recycled product and the virgin product.

### [Comparative Examples 1 to 4]

Each resin composition was produced in the same manner as in Examples 1 to 4, except that a commercially available polyamide 66 (manufactured by TAKAYASU Co., Ltd., TN710L) was used as a recycled product.

### [Examples 5 to 7]

First, a virgin product of polyamide 66 was produced in accordance with the flowchart shown in FIG. 1. Next, non-standard products generated in the production step of the virgin product of polyamide 66 were classified into Grades 1 to 4 based on the design factor A (the concentration of copper and molecular weight). The non-standard products classified into the same grade were mixed, followed by adding additives (a thermal stabilizer, an antioxidant or a filler) to form a masterbatch (MB) shown in Table 3, and then melt-kneading the mixture. Namely, four types of melt-kneaded products were obtained, each type in which the additives were added to each mixture of the non-standard products of only Grade 1, Grade 2, Grade 3, or Grade 4. Next, the melt-kneaded products derived from the non-standard products of Grade 1 to Grade 4 were pelletized to obtain four types of recycled products. Next, a recycled product derived from the non-standard products of Grade 1 or a recycled product derived from the non-standard products of Grade 2 was selected as a recycled product based on design factor B (the concentration of copper and molecular weight), melt-kneaded with the obtained virgin product of Polyamide 66, another virgin product (Polyamide 6), and a filler in the amounts shown in Table 3 below, and then pelletized (compounded) to produce each resin composition containing the recycled product and the virgin product.

### [Comparative Examples 5 to 7]

Each resin composition containing a recycled product and a virgin product was produced in the same manner as in Examples 5 to 7, except that melt-kneading was carried out without adding the additives to make the non-standard products a masterbatch (MB), and components as shown in Table 3 below were blended in the amounts shown in the table.

### [Examples 8 to 12]

First, a virgin product of polyamide 66 was produced in accordance with the flowchart shown in FIG. 1. Next, non-standard products generated in the production step of the virgin product of polyamide 66 were classified into Grades 1 to 4 based on the design factor A (the concentration of copper and molecular weight). The non-standard products classified into the same grade were mixed, a coloring agent was added thereto, and then the mixture was melt-kneaded. Namely, four types of melt-kneaded products were obtained, each type in which the coloring agent was added to each mixture of the non-standard products of only Grade 1, Grade 2, Grade 3, or Grade 4. Next, the melt-kneaded products were pelletized to obtain four types of recycled products derived from the non-standard products of Grades 1 to 4. Next, a recycled product derived from the non-standard products of Grade 1 or a recycled product derived from the non-standard products of Grade 2 was selected as a recycled product based on design factor B (the concentration of copper and molecular weight) and compounded with the obtained virgin product of Polyamide 66, another virgin product (Polyamide 61 or Polyamide 6), and additives (a flame retardant, a flame retardant aid, a compatibilizer, a styrene copolymer, an antioxidant, a filler and/or a coloring agent) in the amounts shown in Table 4 below to produce each resin composition containing the recycled product and the virgin product.

### [Comparative Examples 8 to 11]

Each resin composition containing a recycled product and a virgin product was produced in the same manner as in Examples 8 to 12, except that melt-kneading was carried out without adding a coloring agent to the non-standard products, and components as shown in Table 5 below were blended in the amounts shown in the table.

### <Constituents>

### [(A) Recycled products recycled in each grade based on design factor A]

A-1: Polyamide 66 that was recycled from non-standard products classified into Grade 1 in Fig. 1 by the method described in each Example or Comparative Example.
A-2: Polyamide 66 that was recycled from non-standard products classified into Grade 2 in Fig. 2 by the method described in each Example or Comparative Example.

### [(B) Recycled product]

B-1: Polyamide 66 (manufactured by TAKAYASU Co., Ltd., TN710L)

### [(C) Virgin product]

C-1: Polyamide 66
C-2: Polyamide 61
C-3: Polyamide 6 (manufactured by BASF, Ultramid B33L)
C-4: PPE (polyphenylene ether)

### [(D) Flame retardant]

D-1: Brominated polystyrene (BrPs: manufactured by ALBEMARLE CORPORATION, SAYTEXHP-3010G)
D-2: Phosphinic acid-based flame retardant aluminum diethylphosphinate (phosphine AI: manufactured by Clariant, Exolit OP1230)

### [(E) Flame retardant aid]

E-1: Antimony trioxide (Sb₂O₃: manufactured by Dai-ichi F.R. Co., Ltd., antimony trioxide)

### [(F) Compatibilizer]

F-1: m-conjugated PPE

### [(G) Styrene-based copolymer]

G-1: Styrene-acrylonitrile copolymer (AS) (manufactured by Asahi Kasei Corporation) (acrylonitrile content 40% by mass)

### [(H) Antioxidant]

H-1: Hindered phenol-based antioxidant (manufactured by BASF, Irganox 1098)

### [(I) Filler]

I-1: Glass fiber (GF) (manufactured by Nippon Electric Glass Co., Ltd., ECS 03T-275H)
1-2: Glass fiber (GF) (manufactured by Jushi Co., Ltd., ECS10-03-568H)
I-3: Glass fiber (GF) (manufactured by Nippon Electric Glass Co., Ltd., ECS03-T297)

### [(J) Thermal stabilizer]

J-1: Copper iodide (CuI)/potassium iodide (KI)

### [(K) Coloring agent]

K-1: Masterbatch containing black coloring agent (black MB)
K-2: Masterbatch containing a chromatic coloring agent (chromatic MB)
K-3: Dye (adjustment to desired color)

### [(L) Thermoplastic elastomer]

L-1: SEBS (styrene-ethylene-butylene-styrene)

Each production method of the virgin product C-1, virgin product C-2, and compatibilizer F-1 will be explained in detail below. Each of the virgin products C-1 and C-2 obtained by the following production method were dried in a nitrogen stream to adjust the moisture content to about 0.2% by mass, and then used as a raw material of each resin composition in the examples and comparative examples described above.

### [Synthesis Example 1] Synthesis of virgin product C-1 (polyamide 66)

The polymerization reaction of a polyamide was carried out by the "hot melt polymerization method" as follows.

First, 1500 g of an equimolar salt of adipic acid and hexamethylene diamine was dissolved in 1500 g of distilled water to prepare a homogeneous aqueous solution containing 50% by mass of equimolar raw material monomers. This aqueous solution was charged into an autoclave with an internal capacity of 5.4 L, and the autoclave was purged with nitrogen. Next, aqueous vapor was gradually removed to concentrate the aqueous solution to a solution concentration of 70% by mass, while stirring the aqueous solution at a temperature of approximately 110°C or higher and 150°C or lower. Then, the internal temperature was raised to 220°C. At this time, the autoclave was pressurized to 1.8 MPa. The reaction was allowed to continue for one hour while gradually removing aqueous vapor to maintain the pressure at 1.8 MPa until the internal temperature reached 245°C. Then, the pressure was lowered over one hour. Next, the inside of the autoclave was maintained under a reduced pressure of 650 torr (86.66 kPa) for ten minutes with a vacuum device. The final internal temperature at the polymerization was 265°C. Next, an additional pressure was applied with nitrogen to exhaust the resultant in a strand form from a lower nozzle, followed by carrying out cooling with water and cutting to discharge the resultant in the form of pellets. Next, the pellets were dried at 100°C for 12 hours in a nitrogen atmosphere to obtain a virgin product C-1 (polyamide 66).

### [Synthesis Example 2] Synthesis of virgin product C-2 (polyamide 61)

The polymerization reaction of a polyamide was carried out by the "hot melt polymerization method" as follows.

First, 1500 g of an equimolar salt of isophthalic acid and hexamethylene diamine, and adipic acid excess by 1.5% by mol and 0.5% by mol of acetic acid relative to the total equimolar salt components were dissolved in 1500 g of distilled water to prepare a homogeneous aqueous solution containing 50% by mass of equimolar raw material monomers. Next, aqueous vapor was gradually removed to concentrate the aqueous solution to a solution concentration of 70% by mass, while stirring the aqueous solution at a temperature of approximately 110°C or higher and 150°C or lower. Then, the internal temperature was raised to 220°C. At this time, the autoclave was pressurized to 1.8 MPa. The reaction was allowed to continue for one hour while gradually removing aqueous vapor to maintain the pressure at 1.8 MPa until the internal temperature reached 245°C. Then, the pressure was lowered over 30 minutes. Next, the inside of the autoclave was maintained under a reduced pressure of 650 torr (86.66 kPa) for ten minutes with a vacuum device. The final internal temperature at the polymerization was 265°C. Next, an additional pressure was applied with nitrogen to exhaust the resultant in a strand form from a lower nozzle, followed by carrying out cooling with water and cutting to discharge the resultant in the form of pellets. Next, the pellets were dried at 100°C for 12 hours in a nitrogen atmosphere to obtain a virgin product C-2 (polyamide 6I).

### [Synthesis Example 3] Synthesis of compatibilizer F-1 (m-conjugated PPE)

100 parts by mass of poly(2,6-dimethyl-1,4-phenylene ether) (hereinafter, sometimes abbreviated as "polyphenylene ether"), obtained by oxidative polymerization of 2,6-dimethylphenol and having a reduced viscosity (0.5 g/dL chloroform solution, measured at 30°C) of 0.52, 0.1 parts by mass of a radical initiator, and 1.5 parts by mass of maleic anhydride as a compatibilizer were used. The mixture was melt-kneaded under the conditions in which the cylinder temperature was set at 320°C, a screw rotation speed was set at 300 rpm, and a discharge rate was set at 20.15 kg/hr, and was taken out in the form of a strand, followed by cooling in a strand bath. Next, the strand was granulated with a cutter to obtain pellets of polyphenylene ether modified with maleic anhydride. The addition ratio of maleic anhydride was 0.5%.

### <Physical properties and evaluation>

First, pellets of each resin composition obtained in Examples and Comparative Examples were dried in a nitrogen stream to reduce the moisture content in the resin composition to 500 ppm or less. Next, pellets of each resin composition in which the moisture content was adjusted were subjected to measurement and evaluation of the physical properties by the following methods.

### [Tensile strength]

Each of the resin compositions obtained in Examples 1 to 4 and 8 to 12 and Comparative Examples 1 to 4 and 8 to 11 was molded into molded pieces of the multi-purpose specimen type A in accordance with ISO 3167 using an injection molding machine (PS-40E: manufactured by NISSEI PLASTIC INDUSTRIAL CO., LTD.). In the specific molding conditions, the injection and pressure-holding time was set for 25 seconds, the cooling time was set for 15 seconds, the mold temperature was set at 80°C, and the melted resin temperature was set at a temperature higher by 20°C than the melting peak temperature (Tm2) of a polyamide on the high-temperature side.

The obtained molded pieces of the multi-purpose specimen type A were subjected to a tensile test at a temperature of 23°C at a tensile rate of 50 mm/min in accordance with ISO 527 to measure the tensile yield stress as the tensile strength.

The results are shown in Tables 2 and 6.

### [Charpy]

Each molded product (ISO test piece) was obtained by molding pellets of each resin composition obtained in Examples 1 to 3 and 8 to 12 and Comparative Examples 1 to 3 and 8 to 11 using "FN3000" manufactured by NISSEI INDUSTRIES, LTD., under injection molding conditions in which the cylinder temperature was set at 290°C, the mold temperature was set at 100°C, the injection time was set for ten seconds and the cooling time was set for ten seconds. Each of the obtained ISO test pieces was used to measure the Charpy impact strength in accordance with ISO 179. The measured value was the average value of n=6.

### [Izod]

Each of the pellets of the resin compositions obtained in Example 4 and Comparative Example 4 was molded using "PS-40E" manufactured by NISSEI PLASTIC INDUSTRIAL CO., LTD., under injection molding conditions in which the cylinder temperature was set at 290°C, the mold temperature was set at 80°C, the injection time was set for 25 seconds, and the cooling time was set for 15 seconds, thereby obtaining each molded piece of ASTM No. 1. After notching the obtained molded piece, an impact test was carried out using an Izod impact tester (manufactured by Toyo Seiki Seisaku-sho, Ltd.) by the Izod method in accordance with the ASTM D256 standard to measure the notch impact strength.

The results are shown in Table 2.

### [Flame retardancy]

Measurement was carried out using the method of UL94 (standard defined by Under Writers Laboratories Inc., USA). The test piece (with a length of 127 mm, a width of 12.7 mm, and a thickness of 1.6 mm) was prepared by molding each of the pellets of the resin compositions obtained in Examples 1 to 2 and 8 to 9 and Comparative Examples 1 to 2 and 8 to 9 using an injection molding machine (PS-40E: manufactured by NISSEI PLASTIC INDUSTRIAL CO., LTD.) to which a mold of the UL test piece (the mold temperature was set at 100°C) was attached at a cylinder temperature of 290°C. Injection was carried out at a pressure higher by 2% than the complete filling pressure when the UL test piece was molded. The flame retardancy was evaluated into any one of Grades V-0, V-1, and V-2 in accordance with the UL94 standard (vertical combustion test). The smaller the numerical value of the grade, the higher the flame retardancy.

The results are shown in Tables 2 and 6.

### [Moldability]

A molded product having a length of 60 mm, a width of 60 mm, and a thickness of 1.0 mm was prepared by molding each of the pellets of the resin compositions obtained in Examples 1 to 4 and 8 to 12 and Comparative Examples 1 to 4 and 8 to 11 using an injection molding machine (PS-40E: manufactured by NISSEI PLASTIC INDUSTRIAL CO., LTD.).

During molding, the injection and pressure-holding time was set for two seconds, the cooling time was set for six seconds, the mold temperature was set at 130°C, and the melted resin temperature was set at a temperature higher by 10°C than the melting point Tm2 of the polyamide (A).

The moldability was evaluated as follows. It was evaluated that the producibility of a molded article without problems will allow the improvement in the productivity.
O: A molded product was obtained without any problems.
△: A sprue sometimes remained in the mold.

The results are shown in Tables 2 and 6.

### [Dispersibility/resolution of unopening of fibers]

A molded article was obtained using each of the pellets of the resin compositions obtained in Example 5 and Comparative Example 5.

The dispersibility/resolution of unopening of fibers was evaluated as follows. It was evaluated that the producibility of a molded article without problems will allow the improvement in the productivity.
O: The unopening of glass fibers was resolved, and the dispersibility of the resin composition was excellent.
×: The unopening of glass fibers was not resolved, and the dispersibility of the resin composition was deteriorated.

The results are shown in Table 3.

### [Change in color tone]

A molded article was obtained using each of the pellets of the resin compositions obtained in Example 6 and Comparative Example 6.

The change in the color tone was evaluated as follows. It was evaluated that the producibility of a molded article without problems will allow the improvement in the productivity.
O: No change in the color tone was observed.
×: Change in the color tone was observed.

The results are shown in Table 3.

### [Suppression of deterioration in recycled product]

A molded article was obtained using each of the pellets of the resin compositions obtained in Example 7 and Comparative Example 7.

The suppression of deterioration was evaluated as follows. It was evaluated that the producibility of a molded article without problems will allow the improvement in the productivity.
O: Deterioration in recycled pellets was suppressed.
×: Deterioration in recycled pellets was not suppressed.

The results are shown in Table 3.

### [Unevenness in color]

A molded article was obtained using each resin composition obtained in Examples 8 to 12 and Comparative Examples 8 to 11.

The unevenness in color was evaluated as follows. It was evaluated that the producibility of a molded article without problems will allow the improvement in the productivity.
⊚: It was very easy to adjust to the desired color.
O: It was easy to adjust to the desired color.
△: It was not easy to adjust to the desired color.

The results are shown in Table 6.

**[Table 1]**

| | Type | Unit | Example | | | | Comparative Example | | | |
|---|---|---|---|---|---|---|---|---|---|---|
| | | | 1 | 2 | 3 | 4 | 1 | 2 | 3 | 4 |
| (A) Recycled product | A-1: polyamide 66 (Grade 1) | % by mass | 20.0 | | | 21.0 | | | | |
| | A-2: polyamide 66 (Grade 2) | % by mass | | 20.0 | 30.0 | | | | | |
| (B) Recycled product | B-1: polyamide 66 | % by mass | | | | | 20.0 | 20.0 | 30.0 | 21.0 |
| (C) Virgin product | C-1: polyamide 66 | % by mass | 23.2 | 21.5 | 16.7 | 14.0 | 23.2 | 21.5 | 16.7 | 14.0 |
| | C-2: polyamide 61 | % by mass | | 10.4 | | | | 10.4 | | |
| | C-3: polyamide 6 | % by mass | | | 20.00 | | | | 20.00 | |
| | C-4: PPE | % by mass | | | | 23.7 | | | | 23.7 |
| (D) Flame retardant | D-1: BrPs | % by mass | 23.4 | | | | 23.4 | | | |
| | D-2: phosphine Al | % by mass | | 17.0 | | | | 17.0 | | |
| (E) Flame retardant aid | E-1: Sb₂O₃ | % by mass | 10.6 | | | | 10.6 | | | |
| (F) Compatibilizer | F-1: m-conjugated PPE | % by mass | 2.4 | | | 7.8 | 2.4 | | | 7.8 |
| (G) Styrene-based copolymer | G-1: AS | % by mass | | 1.0 | | | | 1.0 | | |
| (H) Antioxidant | H-1: Irganox 1098 | % by mass | | 0.1 | | | | 0.1 | | |
| (I) Filler | I-1: GF | % by mass | 20.4 | 30.0 | | | 20.4 | 30.0 | | |
| | I-2: GF | % by mass | | | 33.3 | | | | 33.3 | |
| | I-3: GF | % by mass | | | | 30.0 | | | | 30.0 |
| (L) Thermoplastic elastomer | L-1: SEBS | % by mass | | | | 3.5 | | | | 3.5 |
| Total | | % by mass | 100.0 | 100.0 | 100.0 | 100.0 | 100.0 | 100.0 | 100.0 | 100.0 |

**[Table 2]**

| Physical properties of resin composition | Unit | Example | | | | Comparative Example | | | |
|---|---|---|---|---|---|---|---|---|---|
| | | 1 | 2 | 3 | 4 | 1 | 2 | 3 | 4 |
| Tensile strength | MPa | 144 | 146 | 188 | 165 | 130 | 130 | 169 | 151 |
| Charpy | kJ/m² | 9.7 | 9.0 | 13.6 | - | 8.6 | 8.0 | 12.0 | - |
| Izod | J/m² | - | - | - | 150 | - | - | - | 137 |
| Flame retardancy | - | V-0 | V-0 | unmeasured | unmeasured | V-2 | V-2 | unmeasured | unmeasured |
| Moldability | - | ○ | ○ | ○ | ○ | ○ | ○ | △ | ○ |

**[Table 3]**

| | | Type | Unit | Example | | | Comparative Example | | |
|---|---|---|---|---|---|---|---|---|---|
| | | | | 5 | 6 | 7 | 5 | 6 | 7 |
| (A) Recycled product | | A-1: polyamide 66 (Grade 1) | % by mass | 20.0 | | 1.6 | 20.0 | | 49.7 |
| | | A-2: polyamide 66 (Grade 2) | % by mass | | 0.02 | | | 46.6 | |
| Recycling step | (H) Antioxidant | H-1: Irganox 1098 | % by mass | | 0.1 | | | | |
| | (1) Filler | I-1: GF | % by mass | 20.0 | | | | | |
| | | I-2: GF | % by mass | | | | | | |
| | (J) Thermal stabilizer | J-1: Cul/KI | % by mass | | | 0.3 | | | |
| Compounding step | (C) Virgin product | C-1: polyamide 66 | % by mass | 60.0 | 46.6 | 68.1 | 60.0 | | 20.0 |
| | | C-2: polyamide 61 | % by mass | | | | | | |
| | | C-3: polyamide 6 | % by mass | | 20.0 | | | 20.0 | |
| | (H) Antioxidant | H-1: Irganox 1098 | % by mass | | | | | 0.1 | |
| | (I) Filler | 1-1: GF | % by mass | | | | 20.0 | | |
| | | I-2: GF | % by mass | | 33.3 | 30.0 | | 33.3 | 30.0 |
| | (J) Thermal stabilizer | J-1: Cul/Kl | % by mass | | | | | | 0.3 |
| Total | | | % by mass | 100.0 | 100.0 | 100.0 | 100.0 | 100.0 | 100.0 |
| Dispersibility/resolution of unopening of fibers | | | - | ○ | - | - | × | - | - |
| Change in color tone | | | - | - | ○ | - | - | × | - |
| Suppression of deterioration in recycled product | | | - | - | - | ○ | - | - | × |

**[Table 4]**

| | | Type | Unit | Example | | | | |
|---|---|---|---|---|---|---|---|---|
| | | | | 8 | 9 | 10 | 11 | 12 |
| (A) Recycled product | | A-1: polyamide 66 (Grade 1) | % by mass | 20.0 | | | | |
| | | A-2: polyamide 66 (Grade 2) | % by mass | | 20.0 | 30.0 | 30.0 | 30.0 |
| Recycling step | (K) Coloring agent | K-1: black MB | % by mass | 1.0 | 1.0 | 1.0 | | |
| | | K-2: chromatic MB | % by mass | | | | 1.0 | 1.0 |
| Compounding step | (C) Virgin product | C-1: polyamide 66 | % by mass | 22.2 | 20.5 | 15.7 | 15.7 | 15.4 |
| | | C-2: polyamide 6I | % by mass | | 10.4 | | | |
| | | C-3: polyamide 6 | % by mass | | | 20.0 | 20.0 | 20.0 |
| | (D) Flame retardant | D-1: BrPs | % by mass | 23.4 | | | | |
| | | D-2: phosphine AI | % by mass | | 17.0 | | | |
| | (E) Flame retardant aid | E-1: Sb₂O₃ | % by mass | 10.6 | | | | |
| | (F) Compatibilizer | F1: m-conjugated PPE | % by mass | 2.4 | | | | |
| | (G) Styrene-based copolymer | G-1: AS | % by mass | | 1.0 | | | |
| | (H) Antioxidant | H-1: Irganox 1098 | % by mass | | 0.1 | | | |
| | (I) Filler | I-1: GF | % by mass | 20.4 | 30.0 | | | |
| | | 1-2: GF | % by mass | | | 33.3 | 33.3 | 33.3 |
| | (K) Coloring agent | K-1: black MB | % by mass | | | | | |
| | | K-2: chromatic MB | % by mass | | | | | |
| | | K-3: dye | % by mass | | | | | 0.3 |
| Total | | | % by mass | 100.0 | 100.0 | 100.0 | 100.0 | 100.0 |

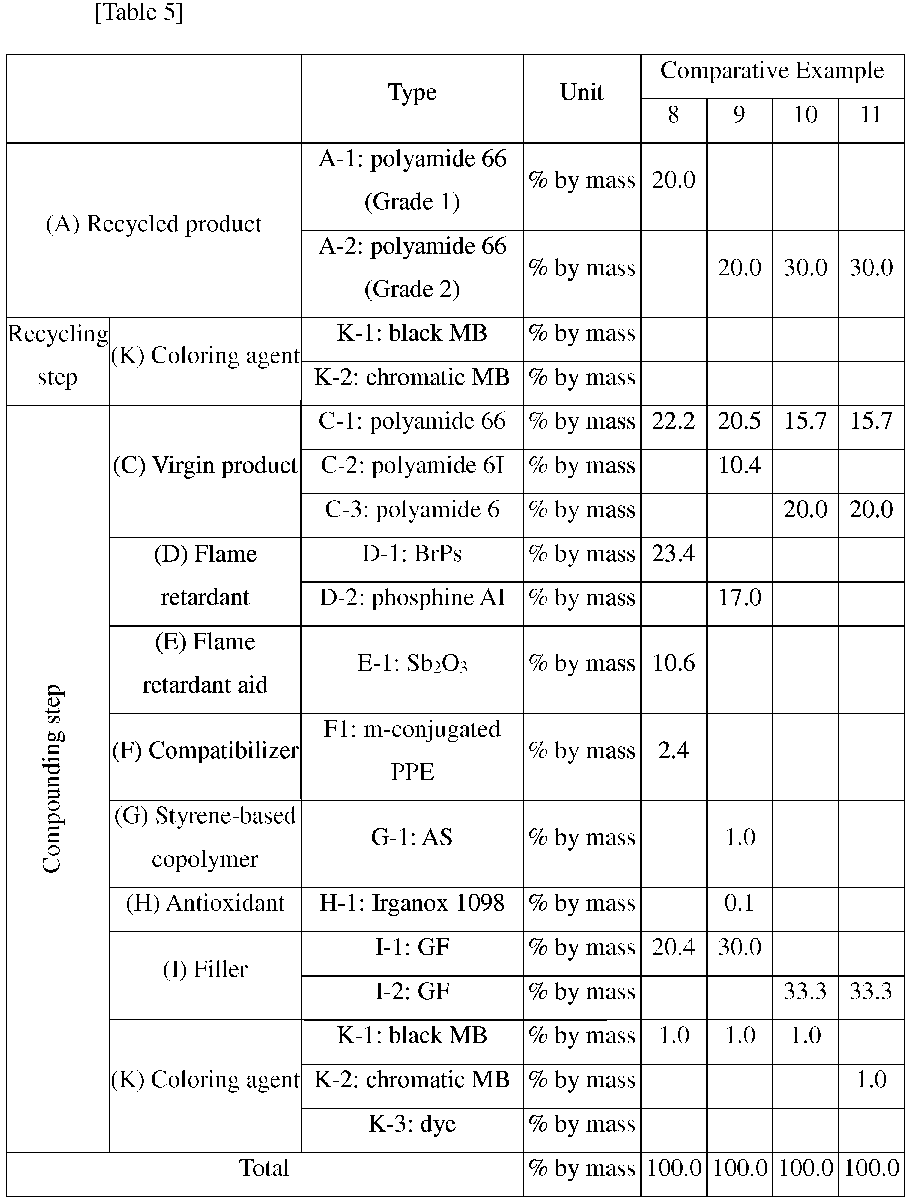

**[Table 6]**

| | | Unit | Example | | | | | Comparative Example | | | |
|---|---|---|---|---|---|---|---|---|---|---|---|
| | | | 8 | 9 | 10 | 11 | 12 | 8 | 9 | 10 | 11 |
| Physical properties | Tensile strength | MPa | 144 | 146 | 188 | 188 | 188 | 130 | 130 | 169 | 169 |
| | Charpy | kJ/m² | 9.7 | 9.0 | 13.6 | 13.6 | 13.6 | 8.6 | 8.0 | 12.0 | 12.0 |
| | Flame retardancy | - | V-0 | V-0 | unmeasured | unmeasured | unmeasured | V-2 | V-2 | unmeasured | unmeasured |
| | Moldability | - | ○ | ○ | ○ | ○ | ○ | ○ | ○ | △ | △ |
| Unevenness in color | | - | ○ | ○ | ○ | ○ | ⊚ | △ | △ | △ | △ |

### INDUSTRIAL APPLICABILITY

The production method according to the present embodiment makes it possible to provide a method for producing a resin composition in which the mechanical strength, flame retardancy, moldability, and/or dispersibility are improved and the unevenness in color, change in color tone, and/or deterioration in recycled products are suppressed by utilizing non-standard products.

## Claims

1. A method for producing a resin composition, comprising:
a controlling step in which non-standard products generated in a production step of a thermoplastic resin are collected and classified into grades based on a design factor A to control the non-standard products;
a recycling step in which the non-standard products in each grade are recycled by grade to obtain recycled products; and
a compounding step in which the recycled products obtained in the recycling step are selected based on a design factor B of a compounded product and compounded.

2. The method for producing the resin composition according to claim 1, wherein the non-standard products are made into a masterbatch in the recycling step.

3. The method for producing the resin composition according to claim 1, wherein a coloring agent is added to the non-standard products in the recycling step.

4. The method for producing the resin composition according to any one of claims 1 to 3, wherein the thermoplastic resin is in a form of pellets.

5. The method for producing the resin composition according to any one of claims 1 to 3, wherein the design factor A is at least one selected from the group consisting of a concentration of copper, a type and an amount of additives, a contamination amount of foreign matter, a molecular weight, a moisture content, a color tone, and a type and an amount ratio of terminal groups.

6. The method for producing the resin composition according to any one of claims 1 to 3, wherein the recycled products are mixed with a virgin product in the compounding step.

7. The method for producing the resin composition according to claim 6, wherein an amount of the recycled products relative to a total mass of the resin composition is 0.1% by mass or more in the compounding step.

8. The method for producing the resin composition according to claim 6, wherein the recycled products and the virgin product are in the form of pellets, and
a ratio of an average size of pellets of the recycled products to an average size of pellets of the virgin product is 0.7 or more and 1.3 or less.

9. The method for producing the resin composition according to any one of claims 1 to 3, wherein the thermoplastic resin comprises a polyamide resin.

10. The method for producing the resin composition according to claim 9, wherein the polyamide resin is at least one selected from the group consisting of polyamide 6, polyamide 66, polyamide 610, polyamide 612, polyamide 6I, polyamide 66/6, and polyamide 66/61.

11. The method for producing the resin composition according to any one of claims 1 to 3, wherein the non-standard products are at least one selected from the group consisting of intermediate products at the time of production changeover due to a change in a type of thermoplastic resin, products contaminated with black spots, products contaminated with foreign matter, pellets with non-standard sizes, scraps from packaging, and products with non-standard physical properties.

12. The method for producing the resin composition according to claim 1 or 3, wherein the recycling step comprises:
a melt-kneading step in which the non-standard products are melt-kneaded to obtain a melted product: and
a pelletizing step in which the melted product after the melt-kneading step is pelletized to obtain pellets of the recycled products.

13. The method for producing the resin composition according to claim 12, further comprising a foreign matter-removing step in which foreign matter is removed by passing the melted product through a metal mesh after the melt-kneading step and before the pelletizing step.

14. The method for producing the resin composition according to claim 2, wherein the recycling step comprises:
a melt-kneading step in which the non-standard products are melt-kneaded to obtain a melted product; and
a pelletizing step in which the melted product after the melt-kneading step is pelletized to obtain pellets of the recycled products, and
an additive comprising at least one selected from the group consisting of thermal stabilizers, antioxidants, fillers, flame retardants and coloring agents is added in the melt-kneading step.

15. The method for producing the resin composition according to claim 14, wherein a mass ratio of the additive and the non-standard products is 10:90 to 90: 10.

16. The method for producing the resin composition according to claim 3, wherein a mass ratio of the coloring agent and the non-standard products is 0.1:99.9 to 10:90.
